# FASCICULE DE BREVET EUROPEEN

(11) **EP 1 677 652 B1**
(45) Date de publication et mention de la délivrance du brevet: **19.08.2009**
(21) Numéro de dépôt: 04791474.2
(22) Date de dépôt: 06.10.2004
(51) Int. Cl.: A47J 31/40

(54) **PERFECTIONNEMENTS AUX GROUPES PERCOLATEURS A CHAMBRE D'INFUSION MOBILE**
PERFEKTIONIERUNG EINER AUTOMATISCHEN KAFFEEMASCHINE MIT EINER BEWEGBAREN BRÜHKOPFEINHEIT
IMPROVEMENTS TO PERCOLATOR GROUPS HAVING A MOVING BREWING CHAMBER

(30) Priorité: 06.10.2003 FR 0311664
(43) Date de publication de la demande: 12.07.2006
(73) Titulaire: Versini, Rolland, 6045 Meggen (CH)
(72) Inventeur: Versini, Rolland, 6045 Meggen (CH)
(74) Mandataire: Roman, Michel
(86) Numéro de dépôt international: PCT/FR2004/002519
(87) Numéro de publication internationale: WO 2005/034696

(56) Documents cités:
- EP-A- 0 298 547
- FR-A- 2 812 528
- US-A- 4 230 033
- US-B1- 6 253 664

## Description

La présente invention a pour objet des perfectionnements apportés aux groupes percolateurs à chambre d'infusion mobile.

Ces appareils sont destinés à la confection, dans des conditions entièrement automatiques et sans intervention humaine, d'une boisson chaude telle qu'un café de type "expresso", c'est à dire délivré et mis à la disposition du consommateur immédiatement au sortir de la phase de percolation.

Les percolateurs réalisés à ce jour sont le plus souvent basés sur l'utilisation d'un cylindre vertical constituant la chambre d'infusion dans lequel est déversé une certaine quantité de café moulu retenu par une grille constituant le fond dudit cylindre. Un piston se déplaçant verticalement vient d'abord compresser la poudre de café, au travers de laquelle de l'eau chaude est alors injectée puis évacuée ensuite.
La présence du piston mobile au-dessus du cylindre rend l'opération de déversement de la poudre de café dans celui-ci malaisée, en imposant un cheminement compliqué et des moyens de guidage mobiles.

Le brevet N° EP 0 521 861, du même inventeur remédie partiellement à ces défauts. II décrit un dispositif équipé d'un groupe mécanique disposé horizontalement dans lequel les mouvements des pièces mobiles sont tous provoqués par deux crémaillères à déplacements horizontaux inversés entraînant une série de traverses coulissant sur des colonnes, la chambre d'infusion à axe horizontal, dans laquelle le passage de l'eau chaude se fait verticalement, étant prolongée par une chambre de remplissage mobile horizontale recevant le déversement direct de la poudre de café.

Le brevet N° EP 0 634 904, déposé également par l'auteur de la présente demande, fait état d'un percolateur constitué d'un groupe mécanique horizontal amovible équipé d'une chambre d'infusion à fond mobile prolongée par une chambre de remplissage se déplaçant conjointement avec ledit fond mobile, les organes principaux du groupe étant réalisé à partir de profilés fonctionnels, en particulier un rail fixe, la chambre d'infusion ainsi qu'une pièce mobile coulissant sur ledit rail fixe et portant le piston de compression ainsi qu'une crémaillère principale entraînant une crémaillère secondaire par l'intermédiaire d'un pignon fixe, la chambre de remplissage et le fond mobile coulissant également sur ce rail fixe.

Ces dispositifs sont relativement complexes en raison de la présence d'une chambre de remplissage et de l'entraînement des pièces mobiles par plusieurs crémaillères, tout en restant amovible.

L'auteur de la présente invention a déposé le 02/08/2000 une demande de brevet publiée sous le numéro FR 2 812 528 concernant un groupe percolateur à chambre d'infusion mobile et démontable sans outillage constitué d'un ensemble mécanique disposé horizontalement comportant trois éléments :
- une partie fixe incluant une embase, la motorisation, l'entraînement et le piston d'injection,
- un tiroir amovible portant le conduit d'écoulement du café et, d'autre part,
- une partie mobile comprenant une chambre d'infusion, un contre-piston et un racleur articulé dont les mouvements sont provoqués par les déplacement de la chambre d'infusion engendrés par deux tirants actionnés par une vis entraînée par un moto-réducteur.
   Cet appareil qui s'est révélé très efficace comporte quelques inconvénients qui sont apparus à l'usage. Par exemple, les tirants actionnant la chambre d'infusion peuvent pivoter d'un quart de tour en position arrière extrême de façon à permettre le verrouillage ou la libération de l'ensemble, ce qui ne permet pas de débloquer la partie mobile en position intermédiaire.

Le dispositif selon la présente invention constitue un perfectionnement de celui faisant l'objet de la demande ci-dessus. Il permet de réaliser une machine automatique de percolation sous pression comportant un petit nombre de pièces extrêmement fiables et d'un entretient particulièrement aisé.

Il est constitué d'un groupe mécanique disposé horizontalement comportant d'une part une partie fixe incluant la motorisation , le système d'entraînement et un faux-piston de centrage et, d'autre part, un tiroir amovible comportant un piston fixe à une extrémité et le conduit d'écoulement à l'autre extrémité, ainsi qu'une chambre d'infusion, un piston d'extraction et un ensemble racleur articulé, mobiles tous les trois, les mouvements de la chambre d'infusion, du piston d'extraction et du racleur étant assurés grâce à deux tirants, le système de verrouillage de la chambre d'infusion sur les tirants étant constitué d'un clip rotatif pouvant être actionné quelle que soit la position de la chambre, de façon à pouvoir libérer cette dernière en cas de blocage du mécanisme même si elle se trouve dans une position intermédiaire, et permettant ainsi le démontage du tiroir amovible supportant le piston fixe, la chambre d'infusion mobile, le piston d'extraction et l'ensemble racleur, le tiroir amovible comportant châssis latéral vertical libérant totalement le passage vers le bas, facilitant ainsi l'évacuation du marc.

Sur les dessins annexés, donnés à titre d'exemple non limitatif d'une des formes de réalisation de l'objet de l'invention:
la figure 1 montre le groupe mécanique vu en perspective axonométrique,
la figure 2 représente, vue de dessus, l'armature contenant le groupe percolateur,
les figures 3 et 4 représentent le groupe percolateur vu respectivement de dessus et de côté,
la figure 5 est une coupe transversale suivant les flèches F1 de la figure précédente,
la figure 6 est un écorché en perspective axonométrique de la chambre d'infusion et du piston d'extraction,
la figure 7 représente le dispositif de verrouillage de la chambre d'infusion sur les tirants assurant ses mouvements,
la figure 8 est une vue de face de la pièce mobile supportant le racleur,
les figures 9, 10, 11 et 12 sont des coupes axiales verticales de chambre d'infusion et des pistons montrant le fonctionnement du dispositif contrôlant les mouvements du piston d'extraction,
la figure 13 est une vue partielle en coupe axiale du mécanisme permettant le déplacement de la pièce mobile supportant le racleur
les figures 14 à 16 sont des agrandissements du détail D1 de la figure 13 illustrant différentes positions du mécanisme.
et les figures 17 à 20 montre les différentes positions de la chambre d'infusion au cours de son extraction et de sa remise en place dans une variante selon laquelle le verrouillage de la chambre est assuré par un levier oscillant actionné par un bouton poussoir.

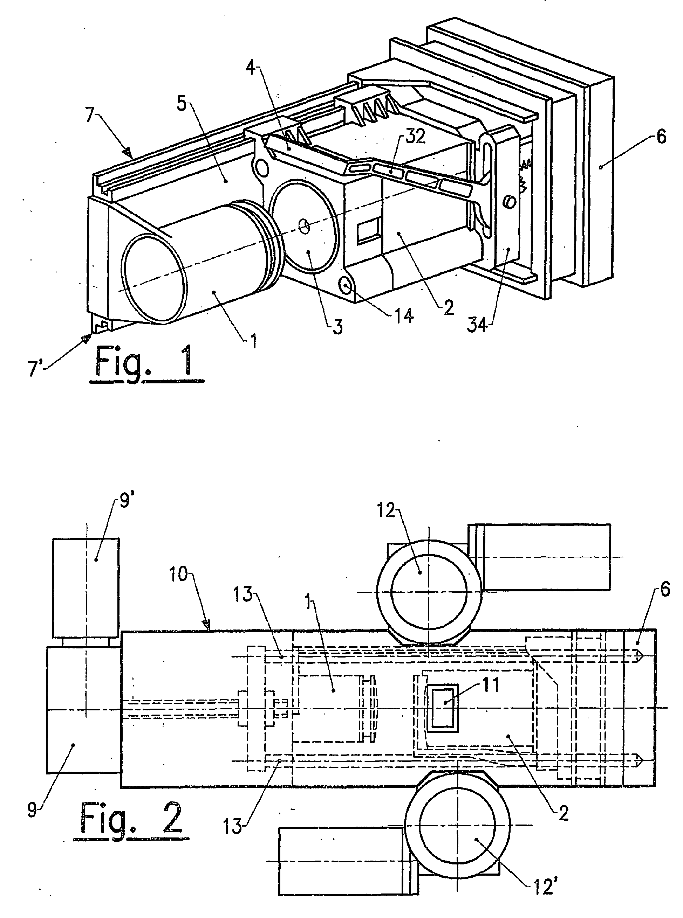

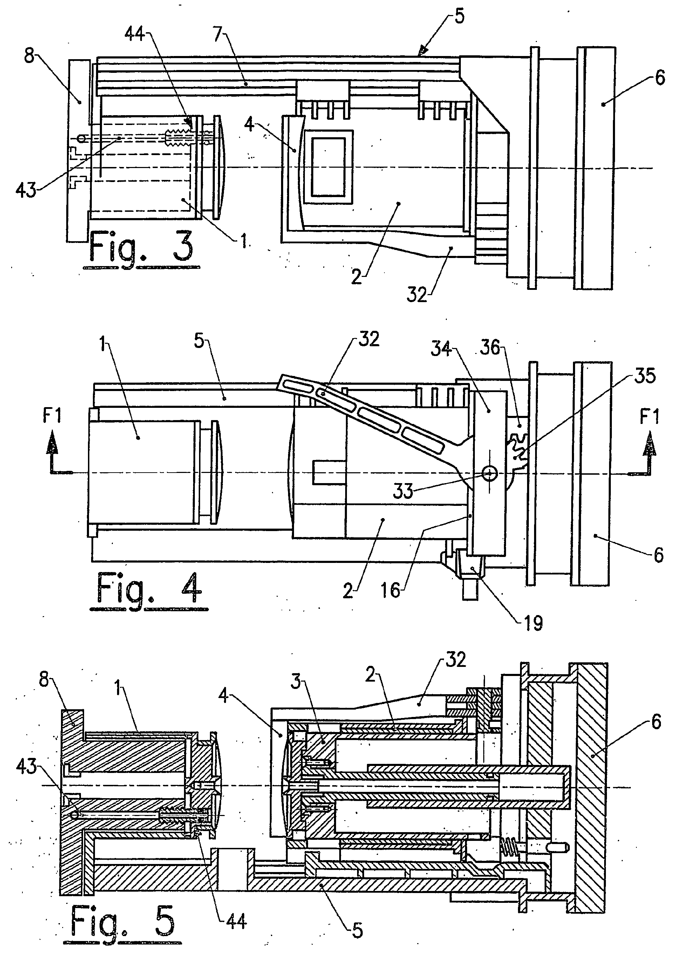

Le dispositif de percolation, figures 1 à 15, est constitué pour l'essentiel d'un piston fixe 1, d'une chambre d'infusion 2 mobile, d'un piston d'extraction 3 également mobile situé à l'intérieur de la chambre d'infusion, et d'un racleur 4 lui aussi mobile et articulé permettant l'évacuation du marc.
Le groupe percolateur est monté sur un tiroir amovible comportant un châssis latéral 5 vertical et une platine frontale 6 avec conduit d'écoulement du café à une extrémité, deux rails horizontaux 7, 7' entre les deux extrémités le long desquels se déplace la chambre d'infusion 2 et à, l'autre extrémité (figure 1), le piston fixe 1 venant se positionner et se connecter sur un faux-piston 8 de la partie fixe (figures 3 et 5).

L'ensemble, complété d'un moteur 9 et d'un système d'entraînement 9' assurant les déplacements du groupe percolateur, est disposé dans une armature 10 fermée comportant une ouverture supérieure 11 permettant le remplissage de la chambre d'infusion 2, ainsi que deux broyeurs 12, 12' pouvant être commandés individuellement et débiter à la demande deux produits distincts, par exemple du café normal et du café décaféiné, ou deux cafés différents complémentaires (figure 2).

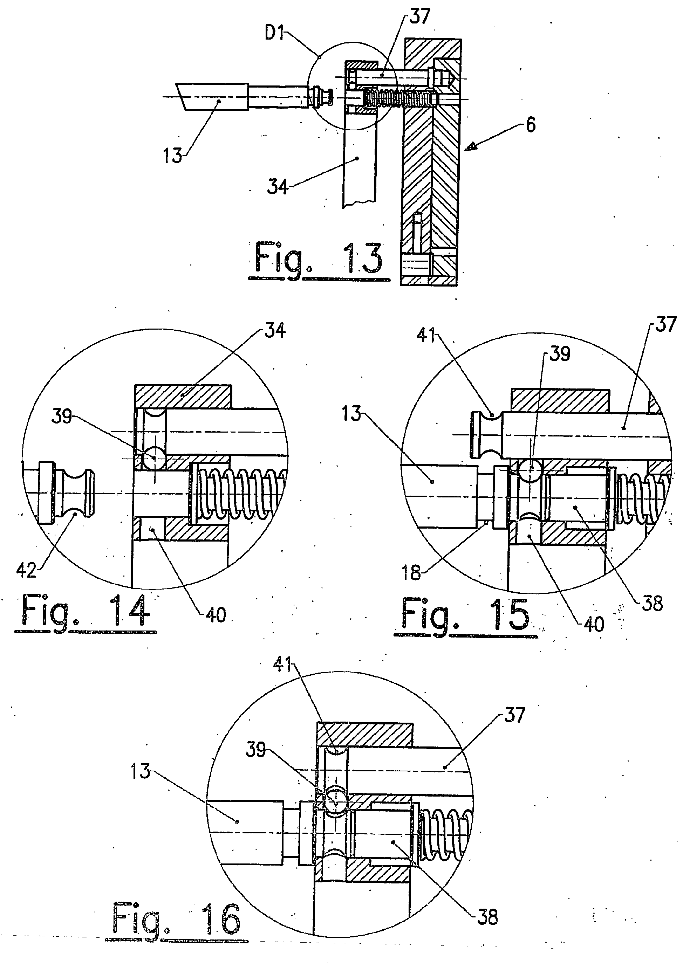

Le mouvement de la chambre d'infusion 2 est assuré grâce à deux tirants 13 actionnés par le système d'entraînement 9' et passant dans des perçages 14 longitudinaux prévus à cet effet dans la paroi de la chambre d'infusion. Le fond de cette dernière comporte des griffes 15 agencées pour maintenir en place un clip rotatif 16 pourvu de deux encoches 17 s'insérant dans des rainures circulaires 18 aménagées aux extrémités des tirants 13 (cf figure 15). En cours de fonctionnement, le clip est bloqué en position par un dispositif de verrouillage agissant sur un élément en saillie 19 du clip et qui peut être débloqué manuellement pour permettre de faire effectuer au clip une rotation libérant ainsi la chambre d'infusion 2 en cas d'incident, quelle que soit sa position.
Cette disposition permet de démonter très facilement le tiroir amovible sur lequel est monté le châssis 5 portant la platine frontale 6, la chambre d'infusion 2, le piston fixe 1, le piston d'extraction 3 et le racleur 4. L'entretient est ainsi grandement facilité et peut être effectué sans problème par un personnel non spécialisé.

Le montage du tiroir amovible ne peut pas s'effectuer si le clip rotatif 16 n'est pas verrouillé sur les tirants 13. Cette position est vérifiée au moyen d'une disposition mécanique empêchant le passage d'un bac à marcs si le clip n'est pas verrouillé et/ou par un système électrique faisant passer un courant électrique entre deux tirants via le clip, ce courant étant interrompu si le clip n'est pas en place.

La chambre d'infusion 2, après une course libre lui permettant de se placer dans la position de remplissage du café moulu, entraîne le piston d'extraction 3 par l'intermédiaire d'ergots 20 qui sont alors en butée sur le fond de rainures axiales 21 du piston 3 disposées le long de sa paroi externe.
Les ergots 20 ont également pour fonction de lier la chambre et le piston d'extraction en rotation en coulissant le long des deux rainures.
La partie avant du piston d'extraction 3 se prolonge vers l'arrière par trois bandeaux 23 qui ont pour fonction d'obturer les ouvertures d'entrée du café moulu évitant à ce dernier de tomber à l'intérieur de la chambre après le passage du piston diminuant fortement l'encrassement du mécanisme par la poudre de café.

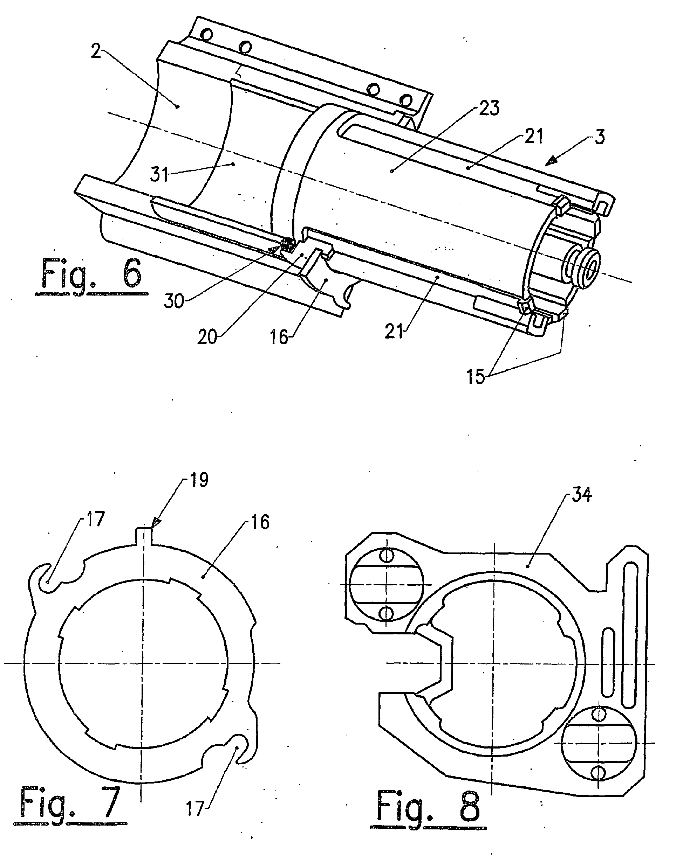

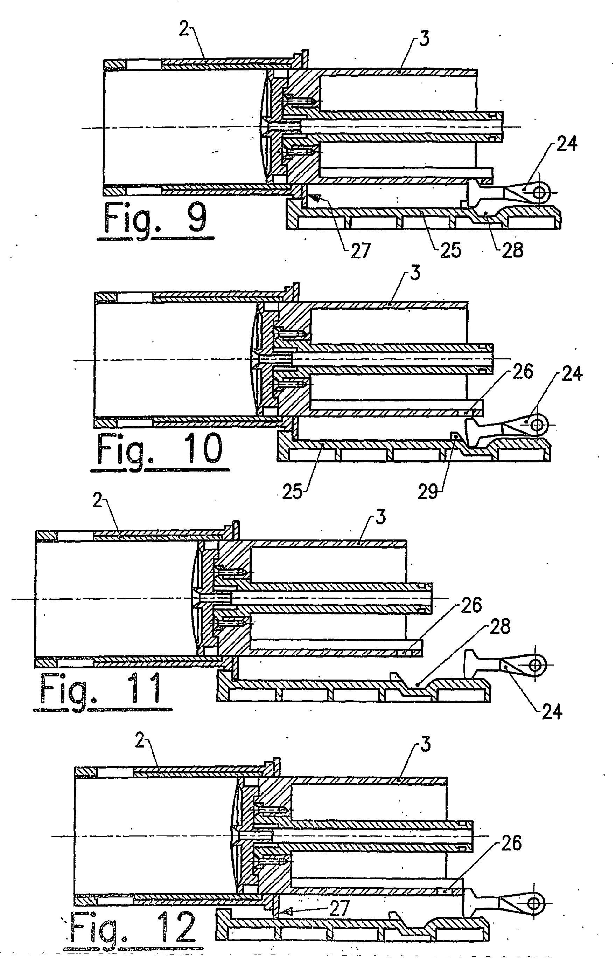

Les mouvements du piston d'extraction 3 sont contrôlés au moyen d'un cliquet oscillant 24 en forme de "T" solidaire du châssis latéral 5 et dont l'une des branches s'appuie sur une barrette coulissante 25 entraînée par la chambre d'infusion 2, la seconde branche du "T" pouvant s'insérer dans une lumière 26 prévue à l'arrière de la paroi latérale du piston d'extraction de façon à immobiliser ce dernier à la fin d'un cycle du percolateur pour qu'il ne soit pas entraîné par la chambre d'infusion 2 lorsqu'elle se déplace vers l'avant au début d'un nouveau cycle (figure 9).
Après le remplissage du café, la chambre d'infusion entraîne la barrette 25 grâce à un épaulement arrière 27. La barrette comporte, côté platine frontale 5, un creux 28 permettant au cliquet oscillant 24 de basculer et de libérer ainsi le piston d'extraction 3 après le remplissage de café moulu (figure 10)
En continuant son mouvement, la chambre d'infusion 2 fait coulisser la barrette jusqu'à ce que le cliquet 24 repose sur une bosse située derrière le creux 28, ce qui fait basculer le cliquet en sens inverse (figure 11).
Lorsque la chambre d'infusion se déplace vers l'arrière en entraînant le piston d'extraction 3 par frottement, celui-ci viendra rapidement buter sur le cliquet oscillant 24 et restera en position jusqu'à ce que l'épaulement arrière 27 de la chambre déplace la barrette coulissante grâce à une butée 29 disposée à l'arrière de cette dernière (figure 12). Durant ce mouvement, le piston d'extraction aura amené la galette de marc a fleur du bord de la chambre d'infusion.
L'étanchéité entre la chambre d'infusion 2 sera avantageusement assurée par un joint torique 30 maintenu contre un épaulement de la chambre par une chemise 31 interne (figure 6).

L'ensemble racleur est formé d'un racloir 4 porté par un bras latéral 32 tournant autour d'un pivot 33 horizontal perpendiculaire à l'axe longitudinal du percolateur et monté sur une pièce mobile 34, un secteur denté 35 faisant partie du bras 32 est entraîné en rotation par une crémaillère 36 solidaire de la platine frontale 6, de façon à ce que lorsque la pièce mobile est écartée de cette platine le racleur soit en position relevée et qu'il s'abaisse lorsqu'elle est poussée contre elle (figure 4).

La pièce mobile 34 peut coulisser sur des tiges 37 fixées sur la platine frontale 6 et est normalement maintenue prisonnière de ces tiges par des billes 39 et grâce à des poussoirs 38 à ressort parallèles à chacune des tiges 37 et coaxiaux avec les tirants 13 actionnant la chambre d'infusion 2, les poussoirs 38, qui ne servent qu'à obturer un alésage transversal 40 de la pièce mobile 34 lors du retour des tirants, comportant une tête déterminée pour pousser les dites bille logée dans les dits alésages transversaux vers une gorge circulaire 41 prévue à l'extrémité de chaque tige 37 (figure 14).

Lorsque la chambre d'infusion 2 approche de la platine frontale 6, les tirants 13 appuient sur les poussoirs 38 qui s'enfoncent et permettent aux billes 39 de s'écarter de la gorge circulaire 41 des tiges 37. Les tirants comportent à leur extrémité une encoche circulaire 42 qui se positionne face à l'alésage dans lequel se trouve la bille de blocage. Sous l'effort de poussée, la bille se déplace vers l'encoche du tirant, ce qui rend la pièce mobile 34 et l'ensemble racleur solidaires des tirants 13. Donc, au retour, le racleur est ramené à sa position et les billes 39 reprennent leur place en désolidarisant ainsi la pièce mobile des tirants.

Le remplissage de la chambre d'infusion peut s'effectuer par le dessus grâce à une ouverture supérieure 11, permettant d'utiliser du café moulu ou des "dosettes". Il s'effectuera cependant de préférence sur les côtés, par des ouvertures latérales permettant d'utiliser deux broyeurs 12, 12' pouvant être commandés individuellement et débiter à la demande deux produits distincts, par exemple du café normal et du café décaféiné, ou deux cafés différents très complémentaires pour obtenir un bon "expresso".

L'appareil fonctionne suivant un cycle comportant les phases suivantes :
- Remplissage : la chambre d'infusion 2 est positionnée de façon à ce que la ou les ouvertures se trouvent face à la sortie des broyeurs 12, 12', le piston d'extraction 3 se trouvant au fond de la chambre d'infusion (figure 9).
- Compression : la chambre d'infusion est déplacée par les tirants 13 en direction du piston fixe 1 en entraînant le piston d'extraction 3 grâce au ergots 20, ce qui a pour effet d'obstruer les sorties des broyeurs 12, 12' et de comprimer la mouture.
- Infusion : l'eau chaude arrive par le piston fixe 1 grâce à un conduit 43 branché par un raccord rapide 44 sur le faux piston 8, traverse une grille montée sur la surface de ce piston, et la mouture. La boisson ainsi obtenue ressort par le contre-piston 3 et arrive dans le conduit d'écoulement pour sortir de l'appareil (figure 5).
- Extraction : la chambre d'infusion 2 est mise en mouvement en sens inverse par les tirants 13 en entraînant le piston d'extraction 3 qui bute alors sur le cliquet oscillant 24.
- Balayage : en continuant leur mouvement, les tirants enfoncent les poussoirs 38 et entraînent la pièce mobile 34, ce qui a pour effet de faire passer le racloir 4 sur la face frontale du piston d'extraction et d'assurer l'évacuation du marc. Dans le même temps, la chambre d'infusion 2 déplace la barrette coulissante 25 et le cliquet oscillant 24 rentre dans la lumière 26, ce qui immobilise le piston d'extraction.
   Lorsque la chambre d'infusion repart en sens inverse pour un nouveau cycle, le racloir 4 reprend sa position haute grâce aux billes 39 qui rendent la pièce mobile 34 solidaire des tirants 13.

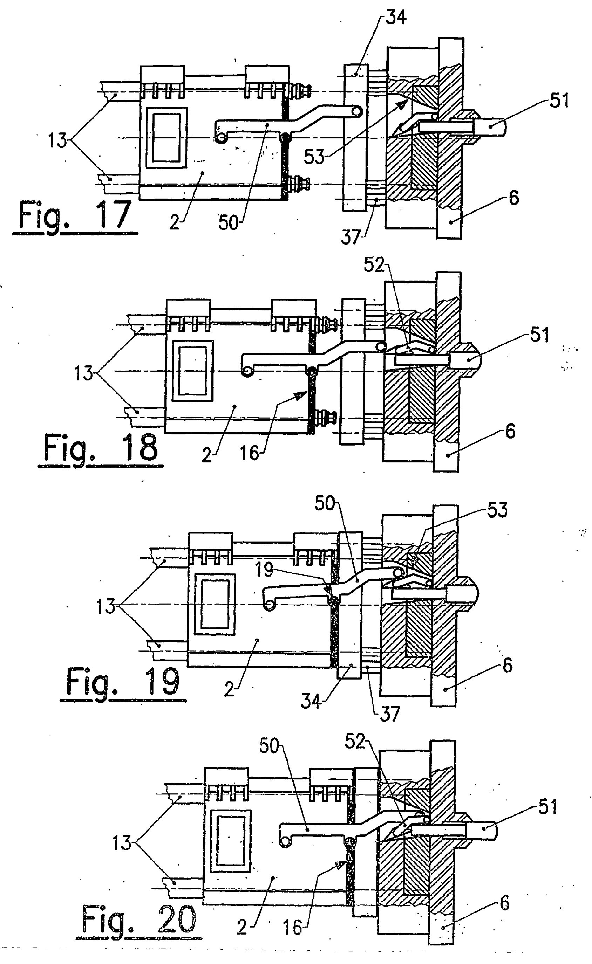

Sur les figures 18 à 20 on peut voir le fonctionnement du système de verrouillage/déverrouillage de la chambre d'infusion 2 dont l'extraction est normalement bloquée par un levier oscillant 50 monté sur le corps de la chambre et actionnant le clip rotatif 16. Le déverrouillage s'effectue grâce à un bouton poussoir 51 disposé sur la face avant de la platine frontale 6 et agissant sur une cale 52 mobile.
Lorsque le système est en position d'attente (figure 17), et que l'on appuie sur le bouton 51, l'opération de déverrouillage peut commencer. Le levier 50 vient à la rencontre de la cale 52 maintenue en place par le bouton poussoir 51 qui est retenu en position enfoncée par une bille à ressort (figure 18).
En glissant contre la cale 52, le levier 50 pivote légèrement sur son axe entraînant le clip rotatif 16 par l'intermédiaire de l'élément en saillie 19 de ce dernier s'insérant dans un orifice du levier oscillant, ce qui libère les tirants 13. La course de la chambre d'infusion 2 est interrompue, ce qui permet l'ouverture du tiroir amovible (figures 7 et 19).
Après fermeture du tiroir amovible, la chambre d'infusion 2 reprend sa course vers la butée arrière. Le levier 50 rencontre alors une rampe inclinée 53 aménagée dans la plaque frontale, ce qui le replace dans sa position de verrouillage des tirants 13. Dans le même temps, un doigt lié à la pièce mobile 34 repousse le bouton poussoir 51. Au retour, la cale 52 libérée par le retour du bouton poussoir 51 en position de repos est basculée en position d'attente par l'extrémité du levier oscillant 50, le groupe peut alors reprendre ses opérations de percolation (figure 20).

Si on appuie sur le bouton poussoir par mégarde durant la période de remise en route, le déverrouillage et le verrouillage s'effectuent de manière masquée sans entraver le fonctionnement du percolateur.

Selon une variante d'exécution, l'unité d'entraînement est composée d'un vérin à double effet actionné au moyen d'eau sous pression provenant de la pompe fournissant également l'eau destinée à infuser le café. Dans ce cas, le contrôle de la position du vérin, ainsi que de la quantité d'eau à infuser, pourra avantageusement être effectué grâce à un unique débitmètre associé à un système programmable actionnant des électrovannes.

Le positionnement des divers éléments constitutifs donne à l'objet de l'invention un maximum d'effets utiles qui n'avaient pas été, à ce jour, obtenus par des dispositifs similaires.

## Revendications

1. Groupe percolateur à chambre d'infusion mobile, destiné à la confection, dans des conditions entièrement automatiques, d'une boisson chaude telle qu'un café de type "expresso", grâce à un cycle comprenant des phases de remplissage, de compression, d'infusion, d'extraction et de balayage du marc, formé d'un groupe mécanique disposé horizontalement comportant d'une part une partie fixe incluant la motorisation (9), le système d'entraînement (9') et un faux-piston (8) de centrage et, d'autre part, un tiroir amovible comprenant un piston fixe (1), une chambre d'infusion (2), un piston d'extraction (3) et un ensemble racleur articulé (4, 32) mobiles tous les trois, les mouvements de la chambre d'infusion, du piston d'extraction et du racleur étant assurés grâce à deux tirants (13) actionnés par le système d'entraînement,
**caractérisé en ce que** le racleur (4) est portée par une pièce mobile (34) normalement verrouillée en place, qui est débloquée et entraînée par les tirants (13) de manière à actionner le racleur pour éliminer le marc, et **en ce que** la chambre d'infusion (2) mobile est verrouillée sur les tirants (13) au moyen d'un dispositif pouvant être actionné quelle que soit la position de la chambre d'infusion, de façon à pouvoir démonter le tiroir amovible en cas de blocage du mécanisme même si elle se trouve dans une position intermédiaire, un dispositif mécanique et/ou électrique empêchant le montage du percolateur si la chambre d'infusion (2) n'est pas verrouillé sur les tirants (13).

2. Groupe percolateur selon la revendication 1, **se caractérisant par le fait que** le dispositif verrouillant la chambre, d'infusion (2) sur les tirants (13) est constitué d'un clip rotatif (16) maintenu au fond de ladite chambre d'infusion par des griffes (15) et comportant des encoches (17) s'insérant dans des rainures circulaires (18) aménagées aux extrémités des tirants (13).

3. Groupe percolateur selon la revendication 2, **se caractérisant par le fait que** le clip rotatif (16) est bloqué en position par un dispositif de verrouillage qui peut être débloqué pour permettre de faire effectuer au dit clip une rotation libérant ainsi le tiroir amovible en cas d'incident, quelle que soit sa position de la chambre d'infusion (2).

4. Groupe percolateur selon l'une des revendication 2 ou 3, **se caractérisant par le fait que** le verrouillage du clip rotatif (16) est vérifié au moyen d'une disposition mécanique empêchant le montage si ledit clip n'est pas verrouillé et/ou par un système électrique faisant passer un courant électrique entre deux tirants (13) via le clip rotatif, ce courant étant interrompu si celui-ci n'est pas en place.

5. Groupe percolateur selon les revendication 2 et 3, **se caractérisant par le fait que** le verrouillage du clip rotatif (16) est effectué par un levier oscillant (50) monté sur le corps de la chambre d'infusion (2) et actionnant le clip rotatif (16), le déverrouillage s'effectuant grâce à un bouton poussoir (51) disposé sur la face avant de la platine frontale (6) et agissant sur une cale (52) mobile agencée pour faire pivote légèrement le levier oscillant (50) sur son axe en glissant contre la cale (52) en entraînant le clip rotatif (16) de manière à libérer les tirants (13) et permettre l'ouverture du tiroir amovible.

6. Groupe percolateur selon la revendication 5, **se caractérisant par le fait que** la plaque frontale (6) comporte une rampe inclinée (53) agencée pour replacer le levier oscillant (50) dans sa position de verrouillage des tirants (13) lorsque le tiroir amovible est remis en place et que la chambre de diffusion (2) reprend sa course vers la butée arrière, un doigt lié à la pièce mobile (34) repoussant dans le même temps le bouton poussoir (51) en position de repos de façon à libérer la cale (52) qui est basculée en position d'attente par l'extrémité du levier oscillant (50).

7. Groupe percolateur selon l'une quelconque des revendications précédentes, **se caractérisant par le fait que** la pièce mobile (34) peut coulisser sur des tiges (37) fixées sur la platine frontale (6) et est normalement maintenue prisonnière de ces tiges par des billes (39) grâce à des poussoirs (38) à ressort parallèles à chacune des tiges (37) et coaxiaux avec les tirants (13) actionnant la chambre d'infusion (2), les poussoirs (38), qui ne servent qu'à obturer un alésage transversal (40) de la pièce mobile (34) lors du retour des tirants, comportant une tête déterminée pour pousser les dites bille logée dans les dits alésages transversaux vers une gorge circulaire (41) prévue à l'extrémité de chaque tige (37).

8. Groupe percolateur selon la revendication 7, **se caractérisant par le fait que** les tiges (37) et les poussoirs (38) sont agencés de manière à ce que, lorsque la chambre d'infusion (2) approche de la platine frontale (6), les tirants (13) enfoncent les poussoirs (38) de manière à permettent aux billes (39) de s'écarter de la gorge circulaire (41) des tiges (37), les tirants comportent à leur extrémité une encoche circulaire (42) déterminée pour se positionner face à l'alésage dans lequel se trouve la bille de manière à ce que, sous l'effort de poussée, la bille se déplace légèrement vers l'encoche du tirant, rendant ainsi l'ensemble racleur (4, 32)solidaire des tirants.

9. Groupe percolateur selon l'une quelconque des revendications précédentes, **se caractérisant par le fait que** le piston fixe (1), la chambre d'infusion 2 mobile, le piston d'extraction 3 mobile et l'ensemble racleur (4, 32) sont montés sur tiroir amovible comportant un châssis latéral (5) vertical et une platine frontale (6) avec conduit d'écoulement du café et agencé pour libérer totalement le passage vers le bas de manière à faciliter l'évacuation du marc.

10. Groupe percolateur selon l'une quelconque des revendications précédentes, **se caractérisant par le fait qu'**il est monté de façon amovible dans une armature (10) fermée comportant une ouverture supérieure (11) permettant le remplissage de la chambre d'infusion (2) par du café moulu ou des "dosettes", ainsi que deux broyeurs (12, 12') de café pouvant être commandés individuellement et débiter à la demande deux produits distincts.

11. Groupe percolateur selon l'une quelconque des revendications précédentes, **se caractérisant par le fait que** la chambre d'infusion (2) comporte des ergots (20) entraînant le piston d'extraction (3) lorsqu'elles sont en butée sur le fond de rainures axiales (21) disposées le long de la paroi externe dudit piston.

12. Groupe percolateur selon l'une quelconque des revendications précédentes, **se caractérisant par le fait que** pour la phase d'infusion l'eau chaude arrive par le piston fixe (1) grâce à un conduit (43) branché au moyen d'un raccord rapide (44) à un faux-piston (8) fixe de centrage faisant partie du groupe percolateur.

13. Groupe percolateur selon l'une quelconque des revendications précédentes, **se caractérisant par le fait que** la partie avant du piston d'extraction 3 se prolonge vers l'arrière par trois bandeaux (23) aptes à obturer les ouvertures d'entrée du café moulu évitant à ce dernier de tomber à l'intérieur de la chambre d'infusion (2) après le passage dudit piston.

14. Groupe percolateur selon l'une quelconque des revendications précédentes, **se caractérisant par le fait que** les mouvements du piston d'extraction (3) sont contrôlés au moyen d'un cliquet oscillant (24) en forme de "T" solidaire du châssis support du groupe et dont l'une des branches suit les formes d'une barrette coulissante (25) entraînée par la chambre d'infusion (2) dans les parties finales de ses mouvements vers l'avant ou vers l'arrière, la seconde branche du "T" pouvant s'insérer dans une lumière (26) prévue à l'arrière de la paroi latérale du piston d'extraction (3) de façon à immobiliser ce dernier à la fin d'un cycle du percolateur pour qu'il ne soit pas entraîné par la chambre d'infusion (2) lorsqu'elle se déplace vers l'avant au début d'un nouveau cycle.

15. Groupe percolateur selon la revendication 14, **se caractérisant par le fait que** la barrette coulissante (25) comporte à l'arrière un creux (28) permettant au cliquet oscillant (24) de basculer et de libérer ainsi le piston d'extraction (3) après le remplissage de café moulu.

16. Groupe percolateur selon l'une quelconque des revendications précédentes, **se caractérisant par le fait que** l'étanchéité entre la chambre d'infusion (2) est assurée par un joint torique (30) maintenu contre un épaulement de ladite chambre d'infusion par une chemise (31) interne.

## Claims

1. In a percolator with a mobile infusion chamber used to prepare, in entirely automatic conditions, a hot beverage such as coffee of the "espresso" type using a cycle which includes filling, compression, infusing, extracting and spent coffee sweeping phases.
the combination of a horizontally arranged mechanical assembly consisting of, on the one hand, a fixed part including the motor assembly (9), the drive system (9') and a centering counter piston (8) and, on the other, a removable drawer with a fixed piston (1), an infusion chamber (2), an extracting piston (3), and a articulated scraper assembly (4, 32), all three movable, the movements of infusion chamber, extraction piston and scraper being carried out by two rods (13) which are operated by the drive system,
**characterized in that** the scraper (4) is carried by a movable part (34) normally locked in its position and which is unlocked and driven by the rods (13) so as to operate the scraper in order to remove the spent coffee and **in that** the movable infusion chamber (2) is locked onto the rods (13) by means of a device that can be operated in whichever position of the infusion chamber, so as to allow to remove the removable drawer in case of a seized mechanism, even when said drawer is in a intermediate position, a mechanical and/or eletrical device being provided to prevent anyone to install the percolator when the infusion chamber (2) is not locked onto the rods (13).

2. Percolator according to claim 1, **characterized in that** the device that locks the infusion chamber (2) onto the rods (13) comprises a rotating clip (16) held onto the infusion chamber bottom through claws (15) and including notches (17) which fit into circular grooves (18) arranged at the ends of the rods (13).

3. Percolator according to claim 2, **characterized in that** the rotative clip (18) is locked in its position by a locking device which can be unlocked to allow the clip to effect a rotation, so that the removable drawer is disengaged in case of a hitch in whatever position of the infusion chamber (2).

4. Percolator according any one of claims 2 or 3, **characterized in that** the locking of the rotating clip (16) is effected by a mechanical means which impedes the mounting when said clip is not locked, by a electrical system which make an electrical current flow betwen two rods (13) through the rotating clip, the current being cut off if said clip is not in its place.

5. Percolator according any one of claims 2 and 3, **characterized in that** the locking of the rotating clip (16) is effected by a swinging lever (60) mounted on the body of the infusion chamber (2) and operating the rotating clip (16), the unlocking being effected through a pushbutton (51) which is arranged on the front face of the base plate (6) and engages a movable shim (52) that is arranged for making the swinging lever (50) a little pivot on its axis in sliding on the shim and driving the rotating clip (16) in a manner to disengage the rods (13) and allow to open the removable drawer.

6. Percolator according to claim 5, **characterized in that** the front plate (6) includes a sloping ramp (53) arranged for resetting the swinging lever (50) into its rods (13) locking position when the removable drawer is reset in its position and the infusion chamber (2) resume its course towards the rear stop, whereas in the same time a finger connected to the movable part (4) drives the pushbutton into its rest position so as to disengage the shim (52) which is rocked into waiting position by the end of the swinging lever (50).

7. Percolator according any one of the preceding claims, **characterized in that** the mobile part (4) is able to slide on stems (37) fixed to the frontal plate (6) and is normally held retained by of these stems through balls (39 by the action of spring sliders (38) parallel to every stem (37) and coaxial with the rods (13) which operate the infusion chamber (2), the sliders (38) which only serve to close a transverse bore (40) of the movable part (34) on the rearwards movement of the rods, including a head provided for driving said balls contained in the transverse holes towards a circular groove (41) arranged at the end of every rod (37).

8. Percolator according to claim 7, **characterized in that** the rods (37) and the sliders (38) are arranged so that, when the infusion chamber (2) comes near to the frontal base plate (6), the rods (13) push the sliders (38) down so as to allow the balls to leave the rod circular grooves (41), the rods having at their end a circular notch (42) intended for taking a position in front of the bore where the ball is, so as, under the pushing force, the ball get lightly towards the rod notch so as to connect the scraper assembly (4, 32) to the rods.

9. Percolator according any one of the preceding claims, **characterized in that** the fixed piston (1), the movable infusion chamber (2), the extracting piston (3) and the scraper assembly (4, 32) are mounted on a removable drawer including a vertical lateral frame (5) and a frontal base plate (6) that includes a caffee discharge pipe and is arranged to make the downwards way totally open so as to make the spent coffee discharge easier.

10. Percolator according any one of the preceding claims, **characterized in that** it is amounted in a removable manner in a closed armature (10) with a upper opening (11) which allows the filling of the infusion chamber (2) with ground caffee or with "dosettes", and it has also two coffee grinders 12, 12') ndividually operable and able to provide two distincts coffee on order.

11. Percolator according any one of the preceding claims, **characterized in that** the infusion chamber includes claws (20) that drive the extracting piston (3) when they stop on the bottom of axial grooves (21) arranged along the piston end wall.

12. Percolator according any one of the preceding claims, **characterized in that**, for the infusion phase, the warm water comes in through the fixed piston (1) by means of a duct (43) which is connected by a quick disconnect coupling (44) to a fixed centering counter piston (8) that is a part of the percolator.

13. Percolator according any one of the preceding claims, **characterized in that** the front part of the extracting piston (3) is extrended rearwardly by three bands (23) which can close the grounded coffee intake openings so that the coffee cannot fall into the infusion chamber (2) when the piston is passaed by.

14. Percolator according any one of the preceding claims, **characterized in that** the extracting piston (3) mouvements are controlled by means of a T-form oscillating ratchet (24) connected to the percolator support frame, one arm of which follows the profiles of a sliding bar (25) that is driven by the infusion chamber (2) in the final parts of its movements frontwardly an rearwardly, whereas the seond T arm can to insert itself into an opening (28) in the extracting piston lateral wall rearward part to lock this piston at the end of a percolator cycle so as to this will not be driven by yhe infusion chamber (2) moving forwardly at the beginning of a new cycle.

15. Percolator according claim 14, **characterized in that** the sliding bar (25) includes rearwardly a recess (28) which allows the oscillating ratchet (24) to rock and so diengages the extracting piston (3) after being filled with ground coffee.

16. Percolator according any one of the preceding claims, **characterized in that** the sealing onto the infusion chamber (2) is effected by means of a 0-ring which is held against an infusion chamber shoulder by a internal casing (31).

## Patentansprüche

1. Perkolator-Aggregat mit beweglicher Brühkammer, welcher zur vollautomatischen Herstellung heisser Getränke solche als ein Kaffee Typ "espresso", in einem Befüllen, Kromprimieren, Brühen Extrahieren, Ausstossen des Kaffeesatzes umfassenden Ablaufzyklus, bestimmt ist und welcher aus einer horizontal angeordneten mechanischen Baugruppe besteht, wobei diese einerseits einen festen, mit dem Motor (9), dem Antriebssystemen (9') und einem Zentrier-Gegenkolben versehenem Bestandteil und anderseits ein abnehmbares Schublade mit einem festen Kolben (1), einer Brühkammer (2), einem Ausstosskolben (3) und einem Abstreiferbaugruppe mit Gelenken (4, 32) umfasst, die alle drei beweglich sind, wobei die Bewegungen der Brühkammer, des Ausstosskolbens und des Abstreifers mittels zwei durch das Antriebssystem betätigten Zugstäbe gesteuert werden,
**dadurch gekennzeichnet dass** der Abstreifer (4) durch ein bewegliches Bauteil (34) getragen ist, welches ublich in seiner Lage verriegelt ist, und sonst entriegelt und durch die Zugstâbe (13) angetriebenen ist, um den Abstreifer zu betätigen und das Kaffesatz auszustossen und dass die bewegliche Brühkammer (2) auf den Zugstäben (13) mittels einer in jeder Lage der Brühkammer betätigbaren Einrichtung verriegelt wird, damit, das abnehmbare Schublade bei festgefresstem Mechanismus ausgebaut werden könne, auch wenn es sich in einer Zwischenlage befindet, wobei eine mechanische und/oder elektrische Einrichtung den Zusammenbau des Perkolators verhindert wenn die Brühkammer (2) nicht auf den Zugstäben (13) verriegelt ist.

2. Perkolator-Aggregat gemäss Patentanspruch 1, **dadurch gekennzeichnet dass** die Einrichtung, welche die Brühkammer (2) auf den Zugstäben (13) verriegelt aus einer drehbaren Sperre (16) besteht, die auf den Boden der Brühkammer durch Krallen (15) festgehalten wird, wobei diese Einrichtung Auskerbungen (17) aufweist, die in an den Enden der Zustäbe (13) angeordneten kreisförmigen Nuten (18) eintreten.

3. Perkolator-Aggregat gemäss Patentanspruch 2, **dadurch gekennzeichnet, dass** die drehbare Sperre (16) in seiner Lage durch eine Verriegelungseinrichtung verriegelt ist, welche ungesperrt werden kann, damit die Sperre gedreht werden könne, wodurch in Störfall das abnehmbare Shublade unabhängig der Lage der Brühkammer losgemacht wird.

4. Perkolator-Aggregat gemäss einem der Patentansprüchen 2 pder 3, **dadurch gekennzeichnet dass** die Verriegelung der drehbaren Sperre (16) mittels einer mechanischen Anordnung, die bei nicht verriegleten Sperre den Zusammebau hindert, und/oder mittels eines elektrischen Systems, das zwischen zwei Zustäben (13) durch die drehbaren Sperre einen elektrischen Strom führt, nachgeprüft wird, wobei der Strom unterbrochen ist wenn sich die Sperre nicht in seiner richtige Lage befindet.

5. Perkolator-Aggregat gemäss einem der Patentansprüchen 2 pder 3, **dadurch gekennzeichnet dass** die Verriegleung der drehbaren Sperre (16) durch einen auf dem Körper der Brühkammer (2) angeordneten und die drehbare Sperre betätigtenden Schwenkhebel (60) bewirklicht ist, wobei die Entriegelung mittels eines auf die vordere Seite der Frontplatte (6) angeordneten Druckknopfs (51) bewirklicht ist, der auf einem beweglichen Abstandsstück (2), welches dazu ausgestattet ist, eine Drehung des Schwenkhebels (50) auf seiner Achse zu erlauben, wobei dieser auf dem Abstandsstück (52) gleitet und dadurch die drehbaren Sperre (16) antriebt, um die Zugstäbe (13) loszumachen und die Aufmachung des abnehmabaren Schublade zu erlauben.

6. Perkolator-Aggregat gemäss Patentanspruchuch 5, **dadurch gekennzeichnet, dass** die Frontplatte (6) eine abfallende Rampe (53) aufweist, die dazu angeordnet ist, den Scwenkhebel (50) in seine zur Verriegelung der Zugstäbe vorgesehen Lage zurückzustellen, wenn das abnehmbare Schublade in seine richtigen Lage wieder hingesetzt ist und die Brühkammer (2) ihren Lauf nach dem Hinteranschlag fortsetzt, wobei in der selben Zeit ein mit dem beweglichen Bauteil verbundener Stift den Druckknopf (51) in seine Ruhelage zurückschiebt, um das durch des Ende des Schwnkhebels (50) in seiner Wartelage gebrachte Abstandsstück (52) freizumachen.

7. Perkolator-Aggregat gemäss irgend einem der vorstehenden Patentansprüchen, **dadurch gekennzeichnet, dass** das bewegliche Bauteil (34) entlang an der Frontplatte (6) befestigten Stangen (37) gleiten kann und üblich auf diesen Stangen durch Kugeln (39) mittels Federchiebern (38) gehalten ist, die jeweils parallel zu den Stiften (37) und coaxial zu den die Brühkammer (2) betätigenden Zugstäben angeordnet sind, wobei die Schiebern (38), die nur zum Verschliessen eine Querbohrung (40) des beweglichen Teil (34) beim Rückkehr der Zugstäben vorgesehen sind, einen Kopf aufweisen, der dazu bestimmt ist, die Kugeln, die in den Querbohrungen aufgenommen sind, gegen eine am Ende jedes Stabs (37) vorgesehene kreisförmige Nut (41) zu verschieben.

8. Perkolator-Aggregat gemäss Patentanspruch 7, **dadurch gekennzeichnet dass** die Stifte (37) und die Schiebern (38) derart angeordnet sind, dass, wenn sich die Brühkammer (2) an die Frontplatine (6) nähert, die Zugstäbe (13) die Schieber (38) eindringen, um die Kugeln (39), sich von der kreislichen Nut (41) der Stangen (37) zu entfernen zu erlauben, wobei die Zugstäbe am ihren Ende eine kreisliche Einkerbung (42) aufweisen, die dazu bestimmet ist, sich gegenüber der Bohrung in welcher sich die Kugel befindet so zu anordnen, dass sich die Kugel durch die Schubkraft ein wenig nach einer Nut des Zugstabs verschoben wird um so die Abstreifereinheit (4, 32) mit den Zugstäben zu verbinden

9. Perkolator-Aggregat gemäss irgendeinem der vorstehenden Patentansprüchen, **dadurch gekennzeichnet dass** der feste Kolben (1), die bewegliche Brühkammer (2), der Ausstosskolben (3) und die Abstreifereinheit (4, 32) auf einem abnehmbare Schublade angebracht sind, das einen seitlichen Rahmen (5) und eine Frontplatte (8) mit einem Koffeeauslaufkanal aufweist und so angenordnet ist damit der Durchgang nach unten freigemacht wird und so die Ausstossoung des Stazes erleichert wird.

10. Perkolator-Aggregat gemäss irgendeinem der vorstehenden Patentansprüchen, **dadurch gekennzeichnet dass** es in abnehmbarer Weise in einem geschlossenen Rahmen (10) angeordnet ist, welcher eine obere Öffnung (11) aufweist, die die Fülling der Brühkammer mit dem gemahlenen Kaffee oder mit "dosettes " erlaubt, und welcher auch zwei Mahlwerke (12, 12') aufweist, die einzig gesteuert werden können und die auf Antrag zwei verschiedene Erzeugnisse liefern können.

11. Perkolator-Aggregat gemäss irgendeinem der vorstehenden Patentansprüchen, **dadurch gekennzeichnet, dass** die Brühkammer zwei Mitnehmer (20) aufweist, die den Ausstoss-Kolben (3) antreiben, wenn sie auf die Grundfläche der entlang der aüssere Wand des Kolbens angeordnete axialen Nuten (21) gesetz sind.

12. Perkolator-Aggregat gemäss irgendeinem der vorstehenden Patentansprüchen, **dadurch gekennzeichnet, dass**, bei der Brühphase, das warme Wasser durch den festen Kolben (1) hindurch über ein Kanal (43) zugefürt wird, welches an einem feststehenden mit dem Perkolatoraggregat verbundenen Zentrier-Gegenkolben (8) mittels eines Schnelltrennanschlusses (44) angeschlossen ist

13. Perkolator-Aggregat gemäss irgendeinem der vorstehenden Patentansprüchen, **dadurch gekennzeichnet dass** das vordere Teil des Ausstosskolben (3) nach hinten durch drei Bänder verlângt ist welche zum Verschliessen von Zugangs des gemahlenes Kafees Öffnungen geeignet sind,

14. Perkolator-Aggregat gemäss irgendeinem der vorstehenden Patentansprüchen, **dadurch gekennzeichnet, dass** die Bewegungen des Ausstosskolbens (3) über eine mit dem Gestell des Aggregats verbundene schwingenden T-förmige Sperrklinke gesteuert sind, wobei sich ein erster Arm dieser Sperrklinke entlang die Profile einer vershiebbaren Leiste (25) erstreckt, welche durch die Brühkammer in den Endteilen ihren Bewegungen nach vorn und nach hinten angetrieben ist, und der zweite Arm des "T" in eine hinter der seitliche Wand des Ausstosskolben (3) vorgesehen Öffnung eindringen kann, um diesen am Ende eines Zyklus des Perkolators festzusetzen, damit er nicht durch des Brühkammer (2) angetrieben werde, wenn diese sich am Anfang eines neuen Zyklus nach vorn bewegt.

15. Perkolator-Aggregat gemäss Patentansprüch 14, **dadurch gekennzeichnet, dass** die verschiebbare Leiste (25) eine hintere Vertiefung (28) aufweist, die das Abkippen einer verschwenkbaren Sperrklinke (24) erlaubt um so den Ausstosskolben (3) nach der Fülling des gemahlenes Kafee loszumachen.

16. Perkolator-Aggregat gemäss irgendeinem der vorstehenden Patentansprüchen, **dadurch gekennzeichnet dass** die Dichtung an der Brühkammer (2) mittels eines durch eine innnere Buchse an eine Schulter der Brükammer angehaltenen O-Rings (30) gewährleistet wird.
